Europäisches Patentamt

(19) European Patent Office

Office européen des brevets

(11) EP 0 944 086 A2

(12) EUROPEAN PATENT APPLICATION

(43) Date of publication:
22.09.1999 Bulletin 1999/38

(51) Int. Cl.$^6$: G11B 27/031, H04N 7/50

(21) Application number: 99301998.3

(22) Date of filing: 16.03.1999

(84) Designated Contracting States:
AT BE CH CY DE DK ES FI FR GB GR IE IT LI LU
MC NL PT SE
Designated Extension States:
AL LT LV MK RO SI

(30) Priority: 20.03.1998 JP 7279798

(71) Applicant:
PIONEER ELECTRONIC CORPORATION
Meguro-ku Tokyo-to (JP)

(72) Inventor:
Inazumi, Atsuchi,
Pioneer Electronic Corporation
Ohta-ku, Tokyo-to (JP)

(74) Representative:
Hutchins, Michael Richard et al
FRY HEATH & SPENCE
The Old College
53 High Street
Horley Surrey RH6 7BN (GB)

(54) Data recording method and data recording system

(57) There is provided a data recording method and a data recording apparatus which allow one program to be extracted and recorded out of multiplexed data in which a plurality of programs are time-division multiplexed. Packets composing one program data are extracted and recorded out of TS data in which a plurality of program data are time-division multiplexed by a transport stream in the MPEG. When a PCR is disposed in the extracted packet at this time, the value of the PCR is replaced with a new PCR value generated based on a bit rate and others at the time of recording.

FIG. 3

TS DATA, RECORDED DATA

CLOCK SIGNAL, CONTROL SIGNAL

EP 0 944 086 A2

**Description**

BACKGROUND OF THE INVENTION

1. Field of the Invention

The present invention relates to a data recording method and a data recording apparatus for extracting and recording one data out of multiplexed data in which a plurality of data are time-division multiplexed.

2. Description of the Related Art

The MPEG 2 (International Standard ISO/IEG 13818-1) proposed by the MPEG (moving picture expert group) is a coding system for compressing digital video and digital audio signals.

The MPEG 2 adopts a time-division multiplexing system using packets. For instance, video and audio signals are divided into streams called packets having an adequate length in multiplexing the video and audio signals by using this system and the packets of the video signal and of the audio signal are transmitted in a time-division manner while being switched appropriately.

The MPEG 2 also adopts a multiplexing and separating system accommodating to multi-programming in order to realize transmission of a plurality of program data. The use of this system allows not only video and audio signals composing one program data to be transmitted in the time-division manner but also video and audio signals composing a plurality of programs to be transmitted in the time-division manner for example.

There is a system called a transport stream as one of such multiplexing and separating systems accommodating to multi-programming. According to this transport stream system, a PES (packetized elementary stream packet) is divided further into a plurality of packets to transmit a plurality of program data in the time-division manner. Each packet has a fixed length which is relatively short, i.e., 188 bytes in concrete.

It is necessary to synchronize an encoder provided in a transmitter and a decoder provided in a receiver (reproducing unit) in order to receive and reproduce the program data transmitted in the time-division manner by adopting the transport stream system. In the transport stream system, information for setting and calibrating clock reference called PCR (program clock reference) is transmitted to synchronize the encoder and the decoder based on it.

It is necessary to control the value of the PCR and the time when the PCR arrives at the decoder accurately in order to synchronize the encoder and the decoder by using the PCR. In concrete, the PCR is data of six bytes and the decoder must set the value of the PCR therein at the time when the final byte of the PCR has arrived. Then, using the PCR arrival time and the value of the PCR, the decoder sets or calibrates STC (system time clock) which is the basis on which the decoding and reproducing processes within the decoder are performed. More specifically, the decoder has a PLL circuit (phase locked loop circuit) in which a counter outputting the STC is built in. Every time when the PCR arrives, the PLL circuit calculates a difference between the value of the PCR and the value of the STC, converts its result into a control signal and performs a feedback control based on this control signal. It then allows the STC which coincides completely with the PCR arrival period to be created and the encoder provided in the transmitter and the decoder provided in the receiver to be synchronized at high precision.

By the way, a technology for receiving multiplexed data transmitted by using the multi-programming multiplexing and separating system as described above and for recording the received multiplexed data is now being developed. When such technology is established, it becomes possible for a broadcasting station providing a digital satellite broadcasting service to multiplex and transmit a plurality of movies recorded in digital signals to each home and for each home to record the movies transmitted from the broadcasting station in the digital signals as they are.

Two methods are now being proposed as methods for recording the multiplexed data transmitted by using the multi-programming multiplexing and separating system.

A first method is to record all of the transmitted multiplexed data. This method, however, has problems that a data amount becomes large because all of the multiplexed data is recorded and that unnecessary program data cannot be excluded even if it is contained in the multiplexed plurality of program data.

A second method is to extract and record one program data out of the transmitted multiplexed data. This method allows recording of only the necessary program data and reduction of the data amount. However, it has a problem that it causes a trouble in the synchronization by means of the PCR in reproducing the recorded program data.

That is, even when the program data once recorded is to be reproduced, it is necessary to set or calibrate the STC of the reproducing unit based on the reproducing time of the PCR and the value of the PCR in the same manner with the case of receiving and reproducing the multiplexed data transmitted from the transmitter. However, there arises a problem in extracting and recording one program data out of the time-division multiplex signals that the relationship between the reproducing time of the PCR and the value of the PCR is destroyed and the STC of the reproducing unit cannot be set or be calibrated based on the PCR.

SUMMARY OF THE INVENTION

It is an object of the present invention to solve the above-mentioned problems by providing a data recording method and a data recording apparatus which can extract at least one program from multiplexed data in which a plurality of programs are time-division multiplexed, and reconstruct the extracted at least one program as a program which is independent of the multiplexed data and which can be reproduced by a reproducing apparatus at high precision.

The object can be achieved by a data recording method in accordance with the present invention. The data recording method comprising the processes of: receiving multiplexed data including a plurality of programs from an external source; extracting at least one program out of the programs included in the received multiplexed data; and recording the extracted at least one program at a predetermined recording rate, wherein each of programs is divided into a plurality of packets, the programs are time-division multiplexed as the multiplexed data by a unit of the packet, a plurality of time preset values are arranged in the multiplexed data at predetermined intervals, and each of the time preset values indicates a passing of time while the multiplexed data is sequentially sent from the external source, characterized in that the extracting process comprises: extracting the packets composing the at least one program to be extracted from the multiplexed data; identifying the time preset values included in the extracted packets; generating a plurality of new time preset values by using the identified time preset values and the predetermined recording rate, each of the new time preset values indicating a passing of time while the extracted at least one program is sequentially recorded at the predetermined recording rate in the recording process; and replacing the time preset values included in the extracted packets by the generated new time preset values.

The plurality of programs are time-division multiplexed as the multiplexed data by the unit of the packet. The program includes program data consisting of sound data, picture data, image data, character data, control data, signal processing data, and other necessary data or data in which all or part of them are combined.

The time preset values are disposed in the multiplexed data at predetermined intervals and are actually placed in the packets. The time preset values indicates a passing of time while the multiplexed data is sequentially sent from the external source. For instance, the time preset values are generated by the external source and inserted to the multiplexed data at the predetermined intervals by the external source. They are used to synchronize the multiplexed data with, for example, the operation of a decoder in a reproducing apparatus when the multiplexed data is reproduced by the reproducing apparatus.

By the way, in the data recording method, at least one program is extracted out of the multiplexed data in which the plurality of programs are multiplexed and the extracted program is recorded with the predetermined recording rate. Then, the extracted and recorded program can be provided as a program independent of the multiplexed data.

In this case, it is necessary to generate new time preset values and to replace the pre-inserted time preset values by the new time preset values. This is because, once the program is extracted from the multiplexed data, the array of the packets in the extracted program varies from the array of the packets in the multiplexed data, and because the recording rate at the time of recording of the extracted program is different from the bit rate at the time of sending of the multiplexed data from the external source. Therefore, it is necessary to generate the new time preset values indicating a passing of time while the extracted one program is sequentially recorded at the predetermined recording rate in the recording process.

To replace the pre-inserted time preset values by the new time preset values, the extraction process is carried out on the extracted packets composing the at least one program to be extracted from the multiplexed data, as follows: the pre-inserted time preset values included in the extracted packets are identified; and then, the new time preset values are generated by using the identified time preset values and the predetermined recording rate; and then, the pre-inserted time preset values included in the extracted packets are replaced by the generated new time preset values.

Then, the extracted program in which the time preset values have been replaced is recorded.

According to the data recording method of the present invention, the recorded program can be reproduced as a program independent of the multiplexed data at high precision. As the time preset values in this recorded program have been replaced, it is possible to establish the complete synchronization between the recorded program and the decoder or the like of the reproducing apparatus when this program is reproduced.

In addition to these advantageous effects, the amount of the recorded program can be reduced, because it is unnecessary to record the other programs included in the multiplexed data.

In the data recording method, in the case where each of packets has a fixed length L, each new time preset value T may be calculated by using an equation:

$$T=(N \times L/R)+T0$$

where the N is the number of the extracted packets counted during a period of time since when the previous time preset value is identified in the identifying process until when the current time preset value is identified in the identifying process, the R is the predetermined recording rate, and the T0 is a time when the previous time preset value is identified in the identifying process. If this calculation is adopted, the new time preset values can be easily generated.

It is noted that the time preset value of the previous time does not mean only the time preset value just before the time preset value of this time. The time preset value of the previous time means the time preset values received during the time since when the one program data has started to be recorded till when the time preset value of this time is received. For example, the number N may be counted during a period of time since when an initial time preset value, which is a first time preset value among the time preset values included in the at least one program to be extracted from the multiplexed data, is identified in the identifying process until when the current time preset value is identified in the identifying process.

Furthermore, the recording rate may be set by dividing a frequency of a clock signal to be used for recognizing the time preset values arranged in the multiplexed data. The recording method includes the process of receiving the multiplexed data including a plurality of the programs from the external source and the process of extracting at least one program out of the programs included in the received multiplexed data. When these processes are carried out, a frequency of a clock signal is synchronized with a frequency identified by the time preset values arranged in the multiplexed data. After this synchronization is established, these processes are actually carried out on the basis of this clock signal. Meanwhile, the plurality of programs are contained in the multiplexed data, whereas only one or a few programs are contained in the recorded program. Therefore, the clock signal of a relatively high frequency is needed to recognize the time preset values arranged in the multiplexed data, whereas a relatively low recording rate may be used to record the one or a few programs extracted from the multiplexed data. Therefore, it is allowed that the recording rate is set by dividing the frequency of the clock signal. Thus, both generating the clock signal and setting the recording rate can be achieved by using a sole oscillator. Furthermore, it is possible to generate the new time preset values corresponding to 1/n of the time preset values arranged in the multiplexed data. Therefore, the recording rate can be easily set, and the synchronization in reproduction of the recorded program can be easily established.

The above-mentioned object can also be achieved by a data recording apparatus in accordance with the present invention. The data recording apparatus includes: a receiving device for receiving multiplexed data including a plurality of programs from an external source; an extracting device for extracting at least one program out of the programs included in the received multiplexed data; and a recording device for recording the extracted at least one program at a predetermined recording rate, wherein each of programs is divided into a plurality of packets, the programs are time-division multiplexed as the multiplexed data by a unit of the packet, a plurality of time preset values are arranged in the multiplexed data at predetermined intervals, and each of the time preset values indicates a passing of time while the multiplexed data is sequentially sent from the external source, characterized in that the extracting device includes: a packet extracting device for extracting the packets composing the at least one program to be extracted from the multiplexed data; an identifying device for identifying the time preset values included in the extracted packets; a generating device for generating a plurality of new time preset values by using the identified time preset values and the predetermined recording rate, each of the new time preset values indicating a passing of time while the extracted at least one program is sequentially recorded at the predetermined recording rate by the recording device; and a replacing device for replacing the time preset values included in the extracted packets by the generated new time preset values.

The nature, utility, and further feature of this invention will be more clearly apparent from the following detailed description with respect to preferred embodiments of the invention when read in conjunction with the accompanying drawings briefly described below.

BRIEF DESCRIPTION OF THE DRAWINGS

FIG. 1 is an explanatory diagram showing TS data received by a data recording/reproducing apparatus of an embodiment of the present invention, recorded data generated by the data recording/reproducing apparatus and recorded data reproduced by the data recording/reproducing apparatus by arranging on the same time axis;
FIG. 2 is an explanatory diagram showing a data amount of the TS data and that of the recorded data according to the embodiment of the present invention; and
FIG. 3 is a block diagram showing the data recording/reproducing apparatus of the embodiment of the present invention.

DETAILED DESCRIPTION OF THE PREFERRED EMBODIMENTS

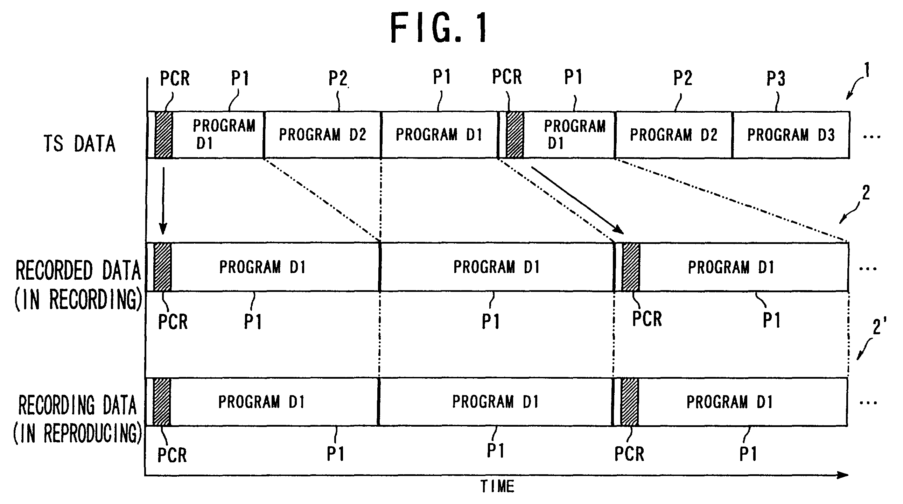

A preferred embodiment of the present invention will be explained below with reference to FIGs. 1 through 3. It is noted that as the embodiment of the present invention, an inventive data recording method will be explained by exemplifying a case of extracting and recording desired program data out of multiplexed data (hereinafter referred to as "TS data") in which a plurality of program data are time-division multiplexed by the transport stream system in the MPEG 2.

I. Structure of TS Data:

At first, the structure of the TS data will be explained with reference to FIG. 1. As shown in FIG. 1, the TS data 1 is data in which a plurality of program data are time-division multiplexed by the transport stream system in the MPEG 2. The program data are sound data, picture data, image data, character data, control data, signal processing data and others or data in which all of or part of those data are combined, e.g., video data and audio data for reproducing a movie. The plurality of program data D1, D2 and D3 are divided into packets P1, P2 and P3 and are arrayed within the TS data 1. That is, the respective packets P1 compose the first program data D1, the respective packets P2 compose the second program data D2 and the respective packets P3 compose the third program data D3. Here, the respective packets P1, P2 and P3 have a fixed length and the packet length is 188 bytes for example.

PCRs are disposed within the TS data 1 at predetermined intervals. The packet length of each packet does not necessarily coincide with the intervals along which the PCRs are disposed, so that there exist packets in which the PCR is disposed and packets in which no PCR is disposed. For instance, although the PCR is disposed in the packet P1 of the TS data 1, no PCR is disposed in the packets P2 and P3 as shown in FIG. 1.

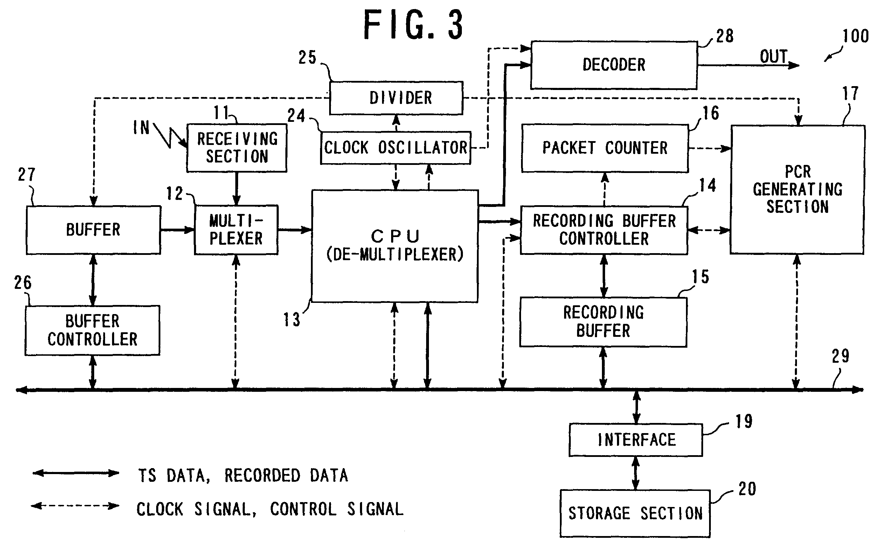

The PCR is used to synchronize the program data and a data recording/reproducing unit 100 shown in FIG. 3, i.e., a transmitter for transmitting the TS data 1 and the data recording/reproducing unit 100, in recording or reproducing the program data within the TS data 1 by the data recording/reproducing unit 100 for example.

Specifically, the PCR is a time stamp calculated from reference clock of the transmitter (internal clock of the transmitter) for transmitting the TS data 1 and is inserted within the TS data 1 at predetermined intervals by the transmitter.

That is, a counter operating at 90 kHz and a counter operating at 27 MHz are provided within the transmitter. These two counters are synchronized. The transmitter counts time while transmitting the TS data 1 by using these two counters. Then, the transmitter generates the PCRs in which values of those two counters are recorded at a predetermined period and inserts the PCRs to the packets composing the TS data 1. That is, the values recorded in the PCR is the values indicative of the time when the packet in which the PCR is inserted is transmitted. In other words, the values recorded in the PCR are the values indicative of timing for decoding (reproducing) the packet in which the PCR is inserted. In concrete, the PCR is data of 42 bits of actual data, wherein the value of the counter operating at 90 kHz is recorded in the high order 33 bits and the value of the counter operating at 27 MHz is recorded in the low order 9 bits.

For instance, the data recording/reproducing unit 100 shown in FIG. 3 operates an internal counter based on a reference clock signal of 27 MHz outputted from a clock oscillator 24 provided therein while recording or reproducing the program data within the TS data 1 transmitted from the transmitter. The data recording/reproducing unit 100 compares the value of the PCR with the value of the internal clock and calculates the difference of the both every time when it receives the PCR disposed in the TS data 1 transmitted from the transmitter. Then, the data recording/reproducing unit 100 sets or calibrates the frequency of the reference clock signal so as to eliminate this difference. It is realized by constructing the clock oscillator 24 by a PLL circuit. Thereby, it becomes possible to synchronize the transmitter transmitting the TS data and the data recording/reproducing unit 100 and to reproduce or record the program data multiplexed into the TS data 1 transmitted from the transmitter at high precision.

II. Structure of Data Recording/Reproducing Unit:

FIG. 3 shows the structure of the data recording/reproducing unit 100 of the present embodiment. The data recording/reproducing unit 100 has functions of receiving the TS data 1 transmitted from the transmitter provided in a broadcasting station providing the digital satellite broadcasting service for example, extracting the respective packets P1 composing one desired program data D1 out of the TS data 1, rearranging (reconstructing) the respective extracted packets P1 to generate recorded data 2 and recording it to a recording medium. The data recording/reproducing unit 100 has also a function of reproducing the program data multiplexed in the TS data 1 transmitted from the transmitter or the recorded data 2.

As shown in FIG. 3, the data recording/reproducing unit 100 comprises, a receiving section 11, a multiplexer 12, a CPU 13, a recording buffer controller 14, a recording buffer 15, a packet counter 16, a PCR generating section 17, an interface 19 for storage section, a storage section 20, the clock oscillator 24, a frequency divider 25, a reproducing buffer controller 26, a reproducing buffer 27, a decoder 28 and a bus 29.

The receiving section 11 receives the TS data 1 transmitted from the transmitter. The multiplexer 12 makes a switching control and others of the TS data 1 outputted from the receiving section 11 to the CPU 13 and the recorded data 2 outputted from the reproducing buffer 27 to the CPU 13.

The CPU 13 makes an overall control of the data recording/reproducing unit 100, e.g., a switching control of a recording operation and a reproducing operation in the data recording/reproducing unit 100. The CPU 13 has also a function as a de-multiplexer and performs a process of extracting packets composing one program data out of the TS data 1 in which a plurality of program data are multiplexed and a process of reading each PCR from the TS data 1 for example.

The buffer controller 14 makes a memory management and control of the buffer 15 and outputs the packets outputted from the CPU 13 to the buffer 15. The buffer 15 temporarily holds the packets outputted from the buffer controller 14 and outputs the packets to the storage section 20 while regulating timing of the output corresponding to the rate of storage operation of the storage section 20. The buffer controller 14 also performs a process for replacing the PCR recorded in the packet together with the packet counter 16 and the PCR generating section 17 as described later. Further, the buffer controller 14 monitors a data amount within the buffer 15 and generates and inserts null packets when data to be recorded is insufficient (not shown).

The packet counter 16 counts a number of packets inputted to the buffer controller 14. The PCR generating section 17 is structured by a sub-CPU, a multi-processing unit or the like and generates a new PCR corresponding to a point of time of the recording operation of the data recording/reproducing unit 100. A storage area for storing the values of the PCRs and the like are provided within the PCR generating section 17. It is noted that the PCR generating section 17 may be structured within the CPU 13.

The storage section 20 is structured by a RAM, a hard-disk, digital VTR or the like for example and stores (records) the recorded data 2 created by rearranging the packets outputted from the buffer 15 via the bus 29 and the interface 19 for the storage section. It is noted that the storage section 20 may be structured by a magnetic disk drive, an optical disk drive, a magnetic tape recording unit or the like so as to store the packets outputted from the buffer 15 in a magnetic disk, an optical disk, a magnetic tape or the like.

The clock oscillator 24 is composed of the PLL circuit and outputs the reference clock signal of 27 MHz to the CPU 13, the decoder 28 and the frequency divider 25. The PCRs disposed in the TS data 1 or the recorded data 2 are read by the CPU 13 and are outputted to the clock oscillator 24 from the CPU 13 when the program data multiplexed in the TS data 1 or the program data (the recorded data 2) recorded in the recorded data 2 is recorded. At this time, the clock oscillator 24 sets or calibrates the frequency of own reference clock signal based on the value of the PCR outputted from the CPU 13.

The frequency divider 25 divides the reference clock signal outputted from the clock oscillator 24 and generates an internal clock signal which becomes a basis of a bit rate R (or recording rate) in recording or reproducing the program data. This internal clock signal is supplied to the PCR generating section 17 and the buffer 27.

The bit rate R may be what permits extraction of one program data out of the TS data 1 and reproduction thereof on real-time without trouble. That is, the bit rate R may be set arbitrarily as long as it is faster than the total bit rate of one program data extracted from the TS data 1. For instance, when the total bit rate of the program data is 4.7 MHz, the frequency divider 25 divides the reference clock of 27 MHz to 3/16 to generate the internal clock of 5.0625 MHz and to set it as the bit rate R. It is noted that when the bit rate R is greater than 27 MHz or when the total bit rate is to be reproduced accurately, a frequency doubler is also used as necessary.

The buffer controller 26 makes a memory management and control of the buffer 27. The buffer 27 temporarily holds the recorded data 2 read from the storage section 20 and inputted via the bus 29 and the buffer controller 26 in reproducing the recorded data 2 stored in the storage section 20.

The decoder 28 decodes the recorded data 2 outputted from the CPU 13 based on the reference clock signal to output audio and video signals in reproducing the recorded data 2 stored in the storage section 20.

III. Program Data Recording Operation:

Next, a program data recording operation will be explained with reference to FIGs. 1 through 3.

When the data recording/reproducing unit 100 starts the recording operation, the receiving section 11 receives the TS data 1 transmitted from the transmitter and inputs it to the CPU 13 via the multiplexer 12 as shown in FIG. 3.

The CPU 13 reads the PCRs disposed in the TS data 1 and outputs them to the clock oscillator 24. Based on the PCRs outputted from the CPU 13, the clock oscillator 24 sets or calibrates the frequency of the clock signal. Thereby, the synchronization between the transmitter and the data recording/reproducing unit 100 is established.

In parallel with such process for establishing the synchronization, the CPU 13 extracts the packets P1 composing one desired program data D1 out of the plurality of program data multiplexed in the TS data 1 and outputs the extracted packets P1 to the buffer controller 14. Along with that, it is also possible to arrange so as to output the packets P1 to the decoder 28 to decode them by the reference clock signal and to output the audio and video signals. Meanwhile, the CPU 13 discards the packets P2 and P3 composing the program data D2 and D3, except of one desired program data D1.

The buffer controller 14 receives the packet P1 outputted from the CPU 13 and determines whether or not the PCR is disposed within the packet P1. When the PCR is disposed within the packet P1 as a result of the determination, it also determines whether or not the PCR is the PCR read for the first time since the start of the recording operation (hereinafter referred to as an "initial PCR"). When it is the initial PCR as a result of the determination, the buffer controller 14 outputs the value T0 of the initial PCR to the PCR generating section 17.

Thereby, the initial PCR is stored in the storage area provided within the PCR generating section 17. Then, the packet P1 in which the initial PCR is disposed is outputted from the buffer controller 14 to the buffer 15. That is, no PCR replacing process is implemented on the packet P1 in which the initial PCR is disposed.

When no PCR is disposed within the packet outputted from the CPU 13 to the buffer controller 14, the buffer controller 14 outputs that packet as it is to the buffer 15.

Meanwhile, when the PCR is disposed within the packet outputted from the CPU 13 to the buffer controller 14 and the PCR is not the initial PCR, the buffer controller 14 executes the PCR replacing process together with the packet counter 16 and the PCR generating section 17.

In the PCR replacing process, the PCR generating section 17 calculates a new PCR value T at first by computing the following expression (2) by using the recording or reproducing bit rate R of the data recording/reproducing unit 100, a number of packets N counted during the time from when the initial PCR has been read till when the PCR of this time is read (a number of packets from the packet in which the initial PCR is recorded to the packet just before the packet in which the PCR of this time is recorded), a packet length L and the value of the initial PCR T0. It is noted that the null packets inserted to the aforementioned recorded data are also counted.

$$T = (N \times L/R) + T0 \qquad (2)$$

Here, the recording or reproducing bit rate R of the data recording/reproducing unit 100 is set based on the internal clock signal outputted from the frequency divider 25 to the PCR generating section 17. The packet counter 16 outputs the number of packets N counted during the time from when the initial PCR has been read till when the PCR of this time is read. That is, the packet counter 16 counts the number of packets inputted to the buffer controller 14 and outputs this count value to the PCR generating section 17. It is noted that the packet counter 16 starts to count the packets when the initial PCR is read. The packet length L is 188 bytes for example and is decided beforehand. The packet length L is stored in the storage area of the PCR generating section 17, so that it may be used for the calculation. The value of the initial PCR T0 is also stored in the storage area of the PCR generating section 17 as described before, so that it may be used for the calculation.

Then, the PCR generating section 17 outputs the new PCR value T calculated by the above expression (2) to the buffer controller 14. The buffer controller 14 replaces the value of PCR which has been recorded in the packet with the new PCR value T. Then, it outputs the packet whose PCR value has been replaced with the new PCR value T to the buffer 15.

The packet outputted to the buffer 15 is stored in the storage section 20 via the bus 29 and the interface 19 for the storage section. The buffer 15 outputs the packet to the storage section 20 with the bit rate R set based on the internal clock signal. Thereby, the packets extracted from the TS data are rearranged, thus creating the recorded data 2 shown in FIG. 1. The recorded data 2 is recorded in the storage section 20.

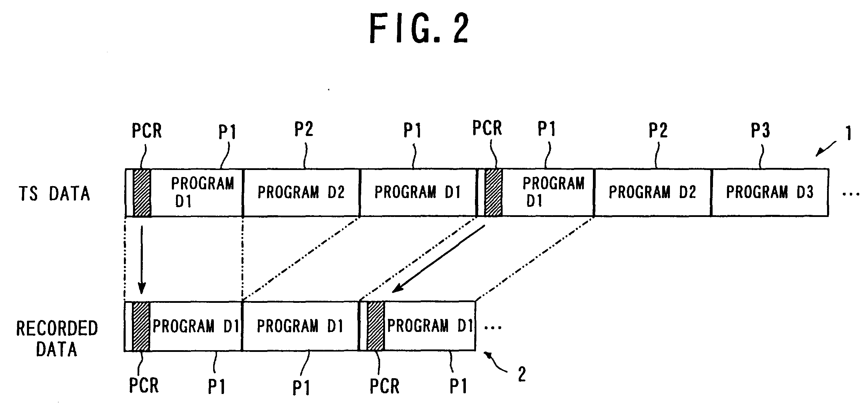

Thus, the data recording/reproducing unit 100 of the present embodiment allows extraction and storage of only one desired program data out of the TS data 1 in which the plurality of program data are multiplexed and reduction of a data amount to be recorded. For instance, when the data amount of the TS data 1 is compared with the data amount of the recorded data 2, the data amount of the recorded data 2 is smaller than that of the TS data 1 as shown in FIG. 2.

IV. Program Data Reproducing Operation:

Next, an operation for reproducing the program data recorded in the storage section 20, i.e., the recorded data 2, by the data recording/reproducing unit 100 will be explained with reference to FIGs. 1 and 3.

When the data recording/reproducing unit 100 starts the reproducing operation, the recorded data 2 recorded in the storage section 20 is outputted at first to the buffer controller 26 via the interface 19 for the storage section and the bus 29 per packet P1. Then, the buffer controller 26 outputs the packets P1 received from the storage section 20 successively to the buffer 27. In succession, the buffer 27 outputs the packets P1 to the multiplexer 12 with the bit rate R set based on the internal clock signal outputted from the frequency divider 25. Then, the packets P1 are inputted to the CPU 13 from the multiplexer 12.

When the packets P1 are inputted to the CPU 13, the CPU 13 reads the PCRs recorded in the packets P1 and outputs them to the clock oscillator 24. Based on the values of the PCRs outputted from the CPU 13, the clock oscillator 24 sets or calibrates the reference clock signal.

The value of the PCR used for setting or calibrating the reference clock signal at this time is the new PCR value T generated by the PCR replacing process described above. Accordingly, the synchronization between the recorded data 2 recorded in the storage section 20 and the data recording/reproducing unit 100 may be established at high precision and the recorded data 2 may be decoded and reproduced at high precision.

Then, the packets P1 of the recorded data 2 inputted to the CPU 13 are transformed into audio and video signals by the decoder 28 based on the reference clock signal and are outputted to a speaker and a monitor not shown.

Thus, the data recording/reproducing unit 100 of the present embodiment allows extraction and recording of the packets composing one desired program data out of the TS data and reduction of the data amount to be recorded.

Further, because it has been arranged so as to replace the value of the PCR which has been disposed in the packet with the new PCR value T calculated based on the bit rate set by the internal clock signal of the data recording/reproducing unit 100 in extracting and recording the packets composing one program data out of the TS data 1, the recorded data 2 stored in the storage section 20 and the data recording/reproducing unit 100 may be synchronized at high precision in reproducing the recorded data 2 stored in the storage section 20 by the data recording/reproducing unit 100. Thereby, the recorded data 2 may be reproduced at high precision.

It is noted that although the case of extracting and recording one program data out of the TS data multiplexed by the transport stream system in the MPEG 2 has been exemplified in the embodiment described above, the present invention is not confined to such case and is applicable also to a case of extracting and recording one program data out of other multiplexed data arranged such that (i) a plurality of program data are time-division multiplexed by packets, (ii) a plurality of time preset values used in synchronizing one program data and a decoder in decoding at least one program data out of the multiplexed plurality of program data by the decoder are provided in advance at predetermined intervals, and (iii) one program data and the decoder are synchronized based on the value of each time preset value received by the decoder every time when they are received.

Further, although the case of calculating the new PCR value T by using the number of packets N counted during the time from when the initial PCR has been read till when the PCR of this time is read has been exemplified in the embodiment described above, the present invention is not confined only to such case and the new PCR value T may be calculated by using a number of packets counted during the time from when the previous PCR has been read till when the PCR of this time is read.

Still more, although the case in which the inventive data recording method is applied to the data recording/reproducing unit 100 having the data recording and data reproducing functions has been exemplified in the embodiment described above, the present invention is not confined only to such case and is applicable to a data recording unit having only the data recording function.

It is noted that the TS data is a concrete example of the multiplexed data and the PCR is a concrete example of the time preset value.

**Claims**

1. A data recording method comprising the processes of: receiving multiplexed data (1) including a plurality of programs (D1, D2, D3) from an external source; extracting at least one program (D1) out of the programs (D1, D2, D3) included in the received multiplexed data (1); and recording the extracted at least one program (D1) at a predetermined recording rate, wherein each of programs (D1, D2, D3) is divided into a plurality of packets (PI, P2, P3), the programs (D1, D2, D3) are time-division multiplexed as the multiplexed data (1) by a unit of the packet, a plurality of time preset values (PCR) are arranged in the multiplexed data (1) at predetermined intervals, and each of the time preset values (PCR) indicates a passing of time while the multiplexed data (1) is sequentially sent from the external source, characterised in that the extracting process comprises:

extracting the packets (P1) composing the at least one program (D1) to be extracted from the multiplexed data (1); identifying the time preset values (PCR) included in the extracted packets (P1); generating a plurality of new time preset values (PCR) by using the identified time preset values (PCR) and the predetermined recording rate, each of the new time preset values (PCR) indicating a passing of time while the extracted at least one program (D1) is sequentially recorded at the predetermined recording rate in the recording process; and replacing the time preset values (PCR) included in the extracted packets by the generated new time preset values (PCR).

2. The method according to claim 1, wherein each of packets (P1, P2, P3) has a fixed length L, and the generating process comprises the processes of:

counting the number N of the extracted packets (P1) during a period of time since when the previous time preset value (PCR) is identified in the identifying process until when the current time preset value (PCR) is identified in the identifying process; and calculating one of the new time preset values T by using an equation:

$$T = (N \times L/R) + T0$$

where the R is the predetermined recording rate and the T0 is a time when the previous time preset value (PCR) is identified in the identifying process.

3. The method according to claim 2, wherein the number N of the extracted packets (P1) is counted in the counting process during a period of time since when an initial time preset value, which is a first time preset value (PCR) among the time preset values (PCR) included in the at least one program (D1) to be extracted from the multiplexed data (1), is identified in the identifying process until when the current time preset value (PCR) is identified in the identifying process.

4. The method according to any one of claims 1 through 3, wherein the programs (D1, D2, D3) are multiplexed as the multiplexed data (1) by a transport stream system standardized by an MPEG (Moving Picture Experts Group), and each of the time preset values is a PCR (Program Clock Reference) standardized by the MPEG.

5. The method according to any one of claims 1 through 4, wherein the recording rate is set by dividing a frequency of a clock signal to be used for recognizing the time preset values (PCR) arranged in the multiplexed data (1).

6. A data recording apparatus (100) comprising: a receiving device (11) for receiving multiplexed data (1) including a plurality of programs (D1, D2, D3) from an external source; an extracting device (13) for extracting at least one program (D1) out of the programs (D1, D2, D3) included in the received multiplexed data (1); and a recording device (20) for recording the extracted at least one program (D1) at a predetermined recording rate, wherein each of programs (D1, D2, D3) is divided into a plurality of packets (P1, P2, P3), the programs (D1, D2, D3) are time-division multiplexed as the multiplexed data (1) by a unit of the packet, a plurality of time preset values (PCR) are arranged in the multiplexed data (1) at predetermined intervals, and each of the time preset values (PCR) indicates a passing of time while the multiplexed data (1) is sequentially sent from the external source, characterised in that the extracting device (13) comprises:

    a packet extracting device (13) for extracting the packets (P1) composing the at least one program (D1) to be extracted from the multiplexed data (1);
    an identifying device (14) for identifying the time preset values (PCR) included in the extracted packets (P1);
    a generating device (17) for generating a plurality of new time preset values (PCR) by using the identified time preset values (PCR) and the predetermined recording rate, each of the new time preset values (PCR) indicating a passing of time while the extracted at least one program (D1) is sequentially recorded at the predetermined recording rate by the recording device (20); and
    a replacing device (14) for replacing the time preset values (PCR) included in the extracted packets (P1) by the generated new time preset values (PCR).

7. The apparatus (100) according to claim 6, wherein each of packets (P1, P2, P3) has a fixed length L, and the generating device (17) comprises:

    a counting device (16) for counting the number N of the extracted packets (P1) during a period of time since when the identifying device (14) identifies the previous time preset value (PCR) until when the identifying device (14) identifies the current time preset value (PCR); and
    a calculating device (14) for calculating one of the new time preset values T by using an equation:

$$T=(N \times L/R)+T0$$

    where the R is the predetermined recording rate and the T0 is a time when the identifying device (14) identifies the previous time preset value (PCR).

8. The apparatus (100) according to claim 7, wherein the counting device (16) counts the number N of the extracted packets (P1) during a period of time since when the identifying device (14) identifies an initial time preset value, which is a first time preset value (PCR) among the time preset values (PCR) included in the at least one program (D1) to be extracted from the multiplexed data (1), until when the identifying device (14) identifies the current time preset value (PCR).

9. The apparatus according to any one of claims 6 through 8, wherein the programs (D1, D2, D3) are multiplexed as the multiplexed data (1) by a transport stream system standardized by an MPEG (Moving Picture Experts Group), and each of the time preset values is a PCR (Program Clock Reference) standardized by the MPEG.

10. The apparatus (100) according to any one of claims 6 through 9, wherein the recording rate is set by dividing a frequency of a clock signal to be used for recognizing the time preset values (PCR) arranged in the multiplexed data (1).

# FIG. 1

TS DATA

PCR  P1  P2  P1  PCR  P1  P2  P3  1

| PROGRAM D1 | PROGRAM D2 | PROGRAM D1 | PROGRAM D1 | PROGRAM D2 | PROGRAM D3 | ... |

RECORDED DATA (IN RECORDING)

2

| PROGRAM D1 | PROGRAM D1 | PROGRAM D1 | ... |

PCR  P1  P1  PCR  P1

2'

RECORDING DATA (IN REPRODUCING)

| PROGRAM D1 | PROGRAM D1 | PROGRAM D1 | ... |

PCR  P1  P1  PCR  P1

TIME

# FIG. 2

EP 0 944 086 A2

TS DATA

| PCR | PROGRAM D1 | PROGRAM D2 | PROGRAM D1 | PCR | PROGRAM D1 | PROGRAM D2 | PROGRAM D3 | ... |

P1    P2    P1    PCR    P1    P2    P3    1

RECORDED DATA

| PCR | PROGRAM D1 | PROGRAM D1 | PCR | PROGRAM D1 | ... |

PCR    P1    P1    PCR    P1    2

# FIG. 3

TS DATA, RECORDED DATA

CLOCK SIGNAL, CONTROL SIGNAL

EP 0 944 086 A2